(19) Europäisches Patentamt

European Patent Office

Office européen des brevets

(11) **EP 3 146 309 B1**

(12) **FASCICULE DE BREVET EUROPEEN**

(45) Date de publication et mention de la délivrance du brevet:
**10.08.2022 Bulletin 2022/32**

(21) Numéro de dépôt: **15734217.1**

(22) Date de dépôt: **20.05.2015**

(51) Classification Internationale des Brevets (IPC):
**G01N 15/10** *(2006.01)* **G01N 15/02** *(2006.01)*

(52) Classification Coopérative des Brevets (CPC):
**G01N 15/10; G01N 15/02;** G01N 2015/0294;
G01N 2015/1093

(86) Numéro de dépôt international:
**PCT/FR2015/000100**

(87) Numéro de publication internationale:
**WO 2015/177414 (26.11.2015 Gazette 2015/47)**

(54) **PROCÉDÉ DE MESURE GRANULOMÉTRIQUE AUTOMATISÉE DE PARTICULES, ET PROCÉDÉ D'ÉVALUATION DE LA DÉFORMATION MORPHOLOGIQUE D'UNE POPULATION DE PARTICULES**

VERFAHREN ZUR AUTOMATISIERTEN PARTIKELGRÖSSENMESSUNG VON PARTIKELN UND VERFAHREN ZUR BEWERTUNG DER MORPHOLOGISCHEN VERFORMUNG EINER POPULATION VON PARTIKELN

METHOD FOR AUTOMATED PARTICLE SIZE MEASUREMENT OF PARTICLES, AND METHOD FOR ASSESSING THE MORPHOLOGICAL DEFORMATION OF A POPULATION OF PARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2014 FR 1401149**

(43) Date de publication de la demande:
**29.03.2017 Bulletin 2017/13**

(73) Titulaire: **SNCF Réseau**
**93418 La Plaine Saint-Denis (FR)**

(72) Inventeurs:
• **VOIVRET, Charles**
**F-77400 Thorigny sur Marne (FR)**
• **PERRIN, Guillaume**
**F-75013 Paris (FR)**
• **FUNFSCHILLING, Christine**
**F-75013 Paris (FR)**

(74) Mandataire: **Delaveau, Sophie**
**ETNA**
**3, rue Geoffroy Marie**
**75009 Paris (FR)**

(56) Documents cités:
**WO-A1-03/005000 WO-A1-2004/102164**
**FR-A- 1 588 650**

# Description

L'invention concerne principalement un procédé de mesure granulométrique automatisée de particules.

L'invention concerne également un procédé d'évaluation de la déformation morphologique d'une population de particules utilisant le procédé de mesure granulométrique précité.

L'invention concerne en outre un dispositif pour réaliser une partie des opérations du procédé de mesure granulométrique.

L'évaluation de la morphologie d'un matériau divisé, dénommé ci-après particule, est utile notamment pour évaluer les propriétés d'une population de particules.

C'est le cas notamment dans le domaine ferroviaire où le ballast, qui forme un lit de particules sur lequel la voie ferrée est en appui de contact, doit permettre d'assurer la bonne tenue de cette voie ferrée en présentant des qualités requises de stabilité et de drainage des eaux de pluie.

Il est connu d'évaluer l'état d'un ballast en réalisant un tamisage des particules de ce ballast. Mais cette méthode reste approximative quant à la forme des grains. Or la morphologie des particules a un impact important sur les propriétés du ballast.

D'autres méthodes plus précises et automatisées ont été récemment développées.

Il s'agit notamment des procédés décrits dans les publications de brevet WO03/005000 et WO2004/102164 qui prévoient le passage automatisé d'une particule entre une source lumineuse et une caméra, puis le traitement du contour de l'ombre de la particule projetée sur la caméra.

Mais ces procédés exploitent une image en deux dimensions de la particule, donc une information parcellaire de la particule, ce dont il résulte que la complexité de la forme de cette particule ne peut pas être appréciée. Ces procédés restent donc insuffisamment précis pour évaluer l'état d'usure d'un ballast.

Le document FR1588650 décrit lui aussi un procédé de mesure granulométrique, faisant appel à des faisceaux de mesure orthogonaux et une mesure du temps de passage d'une particule en chute libre devant lesdits faisceaux.

Dans ce contexte, l'invention propose un procédé de mesure granulométrique automatisée de particules tenant compte de la forme précise des particules examinées.

A cet effet, le procédé de mesure granulométrique automatisée de particules de l'invention est essentiellement caractérisé en ce qu'il comprend au moins les étapes suivantes :

- acquisition d'un nuage de points à trois dimensions de la surface de la particule à examiner par passage de la dite particule devant un dispositif optique,

- exploitation du nuage de points pour caractériser la forme globale de la particule par le jeu de coefficients de projection $C_E$ sur une base de projection [F], laquelle base de projection [F] est déterminée par les étapes de :

   o acquisition d'un nuage de points à trois dimensions de la surface d'au moins une particule de référence par passage de cette particule devant un dispositif optique,
   o réduction de la caractérisation de la surface de la particule de référence à un vecteur R à N dimensions à partir du nuage de points obtenus à l'étape précédente, et
   o détermination de la base de projection [F] permettant de caractériser la forme globale de la particule de référence par le jeu des coefficients de projection $C_R$ sur la dite base [F].

Le procédé de mesure de l'invention peut également comporter les caractéristiques optionnelles suivantes considérées isolément ou selon toutes les combinaisons techniques possibles :

- la vitesse de passage de la particule à examiner et de la particule de référence devant le dispositif optique lors des étapes d'acquisition est contrôlée pour obtenir la précision souhaitée de l'acquisition du nuage de points.

- l'acquisition du nuage de points à trois dimensions de la surface de la particule de référence et de la particule à examiner est réalisée à partir d'une collection d'images numériques de la particule prises sous plusieurs angles par un dispositif de prise d'image.

- dans ce cas, la particule est placée sur un support mobile en translation qui assure par son défilement selon une première direction un premier passage de la particule devant le dispositif de prise d'image au cours duquel une première face de la particule fait face au dit dispositif de prise d'image en permettant la collecte d'un premier nuage de points, une fois que la particule est passée devant le dispositif de prise d'image, la dite particule est retournée sur le support mobile, lequel assure alors par son défilement dans la direction opposée un second passage de la particule devant le dispositif de prise d'image au cours duquel une autre face de la dite particule passe devant le dit dispositif de prise d'image en permettant la collecte d'un second nuage de points, et une fusion des premier et second nuages de points est réalisée pour obtenir le nuage de points à trois dimensions.

- en variante, l'acquisition du nuage de points à trois dimensions de la particule à examiner et de la particule de référence est réalisée par une mesure optique directe de la position de points situés à la surface de la particule considérée.

- dans ce cas, la particule est placée sur une surface vitrée de part et d'autre de laquelle se trouve le dispositif optique qui réalise l'acquisition directe du nuage de points à trois dimensions.
- la réduction de la caractérisation de la surface de la particule de référence est réalisée par les étapes suivantes :

  o obtention d'un nuage de $N_p$ points, chacun de ces points étant décrit par un triplet de valeurs $(x_i, y_i, z_i)$ en coordonnées cartésiennes,
  o transformation du champ de points en coordonnées sphériques $(r_i(\theta, \phi))$ dans un repère centré sur le centre d'inertie du grain,
  o interpolation sur un maillage à pas angulaires fixes comportant Nr sommets,
  o rotation du nuage de points ainsi interpolés pour exprimer le dit nuage de points interpolés dans le repère des directions propres du tenseur d'inertie, et
  o interpolation sur une sphère dont les points sont uniformément répartis pour réduire la caractérisation de la surface de la particule à un vecteur R représentant le rayon du grain à N dimensions.

- la détermination de la base de projection [F] est réalisée à partir du vecteur R à N dimensions défini à l'étape de réduction de la caractérisation de la surface de la particule de référence et par la définition de M fonctions $F_1, ..., F_M$ avec M inférieur à N, telles que

$$R \cong [F]\, C$$

où $[F] = [F_1, ..., F_M]$
et où C est un vecteur de dimension M formant des coefficients de projection sur [F] qui caractérisent la forme globale de la particule ().

- la base de projection [F] est déterminée par les étapes de :

  o acquisition de nuages de points à trois dimensions correspondant aux surfaces d'une population p de particules de référence par passage de chacune de ces particules devant un dispositif optique,
  o réduction de la caractérisation de la surface de chaque particule de référence à un vecteur R à N dimensions à partir du nuage de points obtenus à l'étape précédente, et
  o détermination de la base de projection [F] permettant de caractériser la forme globale des particules par le jeu des coefficients de projection $C_{R1}, C_{R2}, C_{R3}, ...., C_{Rp}$ de chaque particule de référence sur la dite base [F].

L'invention porte également sur un procédé d'évaluation de la déformation morphologique d'une population de particules à examiner par rapport à une population de référence qui est essentiellement caractérisé en ce qu'il comporte les étapes suivantes :

- évaluation des coefficients de projection $C_{E1}$, $C_{E2}$, $C_{E3}$, ...., $C_{Eq}$ sur une base de projection [F] d'une population de q particules à examiner par la mesure granulométrique automatisée de chaque particule E1, E2, E3, ... Eq de la dite population de q particules selon le procédé de détermination précédemment énoncé,
- évaluation des coefficients de projection $C_{R1}$, $C_{R2}$, $C_{R3}$, ...., $C_{Rq}$ sur la base de projection [F] d'une population de q particules à examiner par la mesure granulométrique automatisée de chaque particule R1, R2, R3, ... Rp de la dite population de p particules de référence selon le procédé de détermination précédemment énoncé, et
- comparaison des valeurs des coefficients de projection $C_{E1}$, $C_{E2}$, $C_{E3}$, ...., $C_{Eq}$ de la population de q particules à examiner avec les coefficients de projection $C_{R1}$, $C_{R2}$, $C_{R3}$, ...., $C_{Rp}$ de la population de q particules de référence.

Avantageusement, la comparaison des valeurs des coefficients de projection $C_{E1}$, $C_{E2}$, $C_{E3}$, ..... $C_{Eq}$ de la population de q particules à examiner avec les coefficients de projection $C_{R1}$, $C_{R2}$, $C_{R3}$ $C_{Rp}$ de la population de q particules de référence est réalisée par la comparaison des moments statistiques d'ordre croissants de la population de q particules à examiner avec les moments statistiques d'ordre croissants de la population de p particules de référence.

L'invention porte enfin sur un dispositif pour réaliser l'étape d'acquisition d'un nuage de points à trois dimensions de la surface d'une particule du procédé de mesure granulométrique précédemment énoncé, qui est essentiellement caractérisé en ce qu'il comporte soit un dispositif prise d'image numérique couplé à un système de traitement d'image et des moyens pour amener successivement au moins deux faces de la particule en regard du dit dispositif de prise d'image numérique, soit un dispositif de mesure optique en trois dimensions disposé de part et d'autre d'une surface vitrée et des moyens pour amener la particule sur la surface vitrée en regard du dit dispositif de mesure optique en trois dimensions.

Avantageusement, les moyens pour amener successivement au moins deux faces de la particule en regard du dispositif de prise d'image numérique comportent un support mobile en translation dans deux directions opposées assurant par son défilement selon une première direction un premier passage de la particule devant le dispositif de prise d'image numérique au cours duquel une première face de la particule fait face au dit dispositif de prise d'image numérique en permettant la collecte d'un premier nuage de points, et assurant par son défilement dans la direction opposée un second passage de la particule devant le dispositif de prise d'image numérique au cours duquel la face opposée de la particule fait face au dit dispositif de prise d'image numérique en permettant la collecte d'un second nuage de points, et des moyens de retournement de la particule après le premier passage de la particule devant le dispositif de prise d'image numérique et avant le second passage de la dite particule devant le dispositif de prise d'image numérique.

D'autres caractéristiques et avantages de l'invention ressortiront clairement de la description qui en est donnée ci-dessous, à titre indicatif et nullement limitatif, en référence aux figures annexées parmi lesquelles :

- la figure 1 représente schématiquement une étape préliminaire de l'opération d'acquisition d'un nuage de points à trois dimensions du procédé de mesure granulométrique de l'invention selon une première variante, au cours de laquelle la particule est amenée vers le dispositif optique,
- la figure 2 représente schématiquement le premier passage de la particule sous le dispositif optique lors de l'opération d'acquisition d'un nuage de points à trois dimensions du procédé de mesure granulométrique de l'invention selon la première variante,
- la figure 3 représente schématiquement le retournement de la particule après le premier passage de cette particule sous le dispositif optique lors de l'opération d'acquisition d'un nuage de points à trois dimensions du procédé de mesure granulométrique de l'invention selon la première variante,
- la figure 4 représente schématiquement le second passage de la particule sous le dispositif optique de cette particule lors de l'opération d'acquisition d'un nuage de points à trois dimensions du procédé de mesure granulométrique de l'invention selon la première variante,
- la figure 5 représente schématiquement une étape préliminaire de l'opération d'acquisition d'un nuage de points à trois dimensions du procédé de mesure granulométrique de l'invention selon une seconde variante, au cours de laquelle la particule est amenée vers le dispositif optique, et
- la figure 6 représente schématiquement le passage de la particule sous la surface vitrée au niveau de laquelle s'effectue l'acquisition du nuage de points du du procédé de mesure granulométrique de l'invention selon la seconde variante.

Le procédé de l'invention repose sur l'association d'une mesure granulométrique automatisée permettant de caractériser la forme d'une particule par des données simples, puis d'un traitement de ces données capable de décrire statistiquement cette particule de façon à pouvoir comparer une population de particules à une autre. Ce procédé s'applique notamment à l'évaluation de l'état d'usure d'un ballast de voie ferrée.

La première étape du procédé de mesure granulométrique automatisée de l'invention consiste en l'acquisition d'un nuage de points à trois dimensions de la surface de la particule à examiner.

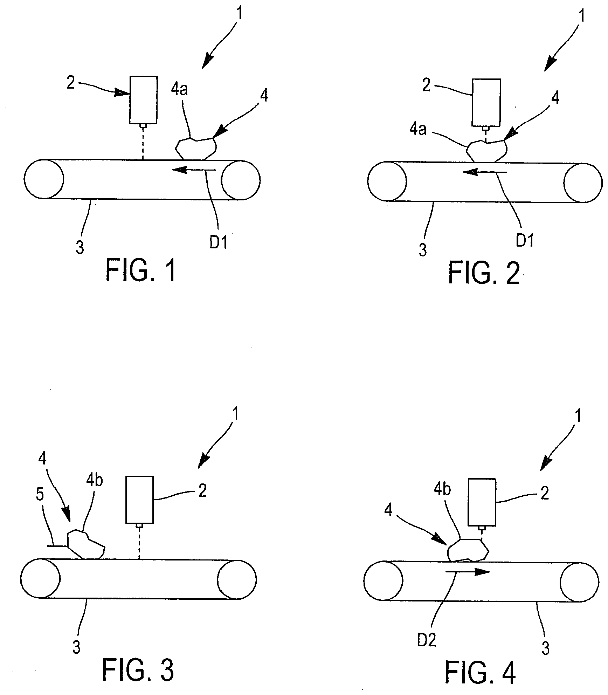

On décrit cette étape ainsi que le dispositif associé formant également partie de l'invention en référence aux figures 1 à 6.

L'acquisition du nuage de points à trois dimensions est réalisée par passage d'une particule devant un dispositif optique.

Selon une première variante, ce dispositif optique peut être un dispositif de prise d'images à deux dimensions numériques, couplé à un système de traitement d'image consistant à reconstruire un nuage de points à partir d'une collection d'images numériques d'une particule à examiner prises sous différents angles.

Pour ce faire, le dispositif d'acquisition d'un nuage de points à trois dimensions 1 comporte un dispositif de prise d'image numérique 2 placé en regard d'un support mobile en translation 3 apte à défiler dans les deux directions D1,D2 opposées. La particule à examiner 4 est disposée sur le support mobile 3 qui est actionné en translation dans la direction D1.

Lorsque la particule 4 passe au niveau du dispositif de prise d'image 2 (figure 2), ce dispositif 2 collecte un premier nuage de points de la face 4a de la particule 4 lui faisant face.

Une fois que la particule 4 a dépassé le dispositif de prise d'image 2, cette particule 4 est retournée sur le support mobile 3 (figure 3) qui est alors commandé en translation dans la direction opposée D2. Pour ce faire, on peut prévoir une spatule 5 qui se glisse sous la particule 4 pour la retourner.

Lorsque la particule 4 passe une seconde fois au niveau du dispositif de prise d'image 2 (figure 4), c'est alors une autre face 4b qui fait l'objet d'une acquisition par le dispositif de prise d'image 2 pour collecter un second nuage de points.

La vitesse de passage de la particule 4 au niveau du dispositif de prise d'image 2 est ajustée pour être compatible avec la vitesse d'acquisition de ce dispositif 2.

Des algorithmes de fusion connus assurent ensuite la fusion de ces premier et second nuages de points pour obtenir un nuage de points unique à trois dimensions décrivant l'intégralité de la surface de la particule 4.

La construction du nuage de points de la surface de la particule nécessite uniquement qu'il y ait un recouvrement entre les prises d'images des faces concernées pour couvrir toute la surface de la particule. Dans la majeure partie des cas, la prise d'image de deux faces de la particule est suffisante et ce, quelle que soit la géométrie de la particule examinée 4.

Néanmoins, dans les cas le nécessitant, on peut prévoir la prise d'image de plus de deux faces de cette particule. Dans cette hypothèse, le dispositif est modifié pour prévoir la prise d'image d'une troisième voire d'une quatrième face. A cet effet, et par exemple pour la prise d'image d'une troisième face de la particule, on peut prévoir une seconde spatule qui, après le second passage de la particule 4 au niveau du dispositif de prise d'image 2, permet de retourner de nouveau la particule qui transite dans la direction D1 vers le dispositif de prise d'image 2 pour subir une troisième acquisition. Tout autre dispositif permettant d'augmenter le nombre de prise d'images de la particule est à la portée de l'homme du métier.

Selon une seconde variante, le dispositif optique est un dispositif effectuant directement une mesure optique en trois dimensions, par exemple par lasergrammétrie, laquelle technique assure la mesure de distances pour reconstruire la surface d'une particule comme un nuage de points. Un tel dispositif est dénommé ci-après laser-scanner à trois dimensions.

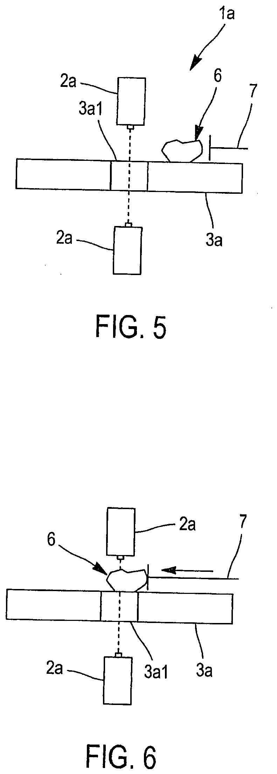

En référence aux figures 5 et 6, le dispositif d'acquisition d'un nuage de points à trois dimensions 1a comporte selon cette variante un support fixe 3a muni d'une surface vitrée 3a1 de part et d'autre de laquelle est disposé le laser-scanner à trois dimensions 2a.

On place la particule à examiner 4 sur le support mobile 3a puis on déplace cette particule 4a dans une direction D1 vers le laser-scanner à trois dimensions 2a jusqu'à la surface vitrée 3a1 par des moyens de déplacement appropriés, par exemple un vérin pousseur 7. On réalise alors une acquisition itérative jusqu'à obtenir une surface fermée suivant un critère de précision donnée.

On pourra utiliser tout autre dispositif optique adapté pour réaliser l'acquisition du nuage de points, par exemple un dispositif à rayons X pour mesurer la densité de la matière de façon à représenter la surface par une isosurface de gradient fort de densité, ou encore un dispositif à infra-rouge.

En outre, dans le cadre de l'invention, on peut prévoir que la particule chute devant le dispositif optique fixe. Dans cette hypothèse et à titre d'exemple, la particule tombe à travers des nappes de laser fixe permettant de mesurer des nuages de points à deux dimensions, les empilements de ces nuages de point assurant la construction du nuage de points à trois dimensions. La précision de cette acquisition sera moins élevée que celle des deux variantes précédemment décrites mais peut être suffisante pour l'exploitation des résultats.

On obtient ainsi un nuage de points décrivant la surface de la particule 4,4a en trois dimensions. La seconde étape du procédé de mesure granulométrique automatisée de l'invention consiste caractériser la forme globale de la particule de manière simple et précise, de façon à pouvoir ensuite comparer une population de particules avec une population de particules de référence. La caractérisation de la forme globale de la particule est obtenue par le jeu de coefficients de projection C sur une base de projection [F].

Cette base de projection [F] est préalablement obtenue de la façon suivante.

On réalise l'acquisition de nuages de points à trois dimensions d'au moins une particule de référence telle que décrite précédemment en référence aux figures 1 à 6. Pour une meilleure précision de la détermination de la base de projection [F], on fait l'acquisition de nuages de point d'une population p de particules de référence. Plus p est élevé, plus la représentativité sur la base [F] est grande.

On décrit ci-dessous l'obtention de la base de projection [F] à partir d'une particule unique, l'obtention de la base de projection [F] à partir d'une population p de particules de référence s'en déduisant.

On caractérise en premier lieu un nuage de points dit optimisé à partir du nuage de points en trois dimensions obtenu à l'étape d'acquisition préalablement explicitée. Pour ce faire, on réalise une succession d'opérations mathématiques.

Le nuage de points en trois dimensions obtenu à l'étape d'acquisition pour la particule de référence est un ensemble de $N_p$ points, chacun de ces points étant décrit par un triplet de valeurs $(x_i, y_i, z_i)$ en coordonnées cartésiennes.

On transforme d'abord le champ de ces points en coordonnées sphériques $(r_i(\theta, \phi))$ dans un repère centré sur le centre d'inertie de la particule.

On réalise ensuite une interpolation sur un maillage à pas angulaires fixes comportant Nr sommets.

On fait alors une rotation du nuage de points ainsi interpolés pour l'exprimer dans le repère des directions propres du tenseur d'inertie, les grains élancés sont alors tous orientés de la même manière.

Puis, on réalise une interpolation sur une sphère dont les points sont uniformément répartis. Pour ce faire, la répartition uniforme des sommets à la surface d'une sphère est réalisée grâce à un algorithme itératif basé sur le repoussement des sommets de la sphère. Le nombre de sommets Nu choisi définit la précision avec laquelle la surface de la sphère est discrétisée. On choisit de manière arbitraire Nr=Nu=N=500.

Suite à cette interpolation, d'une particule à l'autre, la seule variable restante est la valeur du rayon du grain pour une direction donnée. Une particule se réduit donc à un vecteur R à N dimensions et on obtient ainsi un nuage de points optimisé.

La seconde étape pour déterminer la base de projection [F] permettant à la fois de caractériser la forme de particules et de pouvoir comparer la forme de deux populations de particule, consiste à condenser l'information morphologique d'une particule en un nombre le plus petit possible de variables sans pour autant perdre trop d'information. Cette condensation doit être adaptée à la forme des particules considérées. On réalise pour ce faire une base de projection qui doit être la plus petite possible vis-à-vis d'une erreur définie. Chacun des vecteurs de cette base doit par ailleurs contenir l'information morphologique de la particule.

A partir du vecteur R à N dimensions défini précédemment, on cherche à définir M fonctions $F_1, ..., F_M$

avec M très inférieur à N telles que le rayon R peut être approché de manière précise par la formule suivante :

$$R \cong [F]\,C$$

où $[F] = [F_1,...,F_M]$

et où C est un vecteur de dimension M formant des coefficients de projection sur la base de projection [F].

L'identification de cette base de projection [F] à partir des mesures expérimentales d'acquisition du nuage de points en trois dimensions se base sur la diagonalisation de la matrice d'autocovariance des vecteurs du rayon R issus des mesures, cette approche scientifique étant connue en matière de traitement du signal et de réduction statistique.

La construction de cette base [F] étant basée sur des outils statistiques, elle sera d'autant plus représentative, comme dit plus haut, que la population de particules référence servant à son identification sera composée d'un grand nombre de particules.

En disposant de cette base [F], la forme globale d'une particule n'est plus caractérisée que par le jeu de ses coefficients de projection C sur la base [F].

Ainsi, le procédé de mesure granulométrique de l'invention consiste donc, après l'acquisition d'un nuage de points à trois dimensions de la surface de la particule à examiner, à exploiter ce nuage de points pour caractériser la forme globale de la particule en déterminant ses coefficients de projection sur la base de projection [F] précédemment définie.

Pour évaluer l'état d'usure morphologique d'une population de q particules par rapport à une population de p particules de référence, il s'agit donc dans un premier temps de déterminer la base [F] et les coefficients de projection $C_{R1}$, $C_{R2}$, $C_{R3}$, $C_{Rp}$ sur cette base [F] d'une population de p particules de référence par le procédé de mesure granulométrique précédemment décrit.

Puis, chaque particule de la population de q particules à examiner fait l'objet d'une acquisition d'un nuage de points à trois dimensions tel que décrit en référence aux figures 1 à 6 et d'une détermination des coefficients de projection $C_{E1}$, $C_{E2}$, $C_{E3}$, ...., $C_{Eq}$ sur la base [F].

On compare alors les valeurs des coefficients de projection $C_{E1}$, $C_{E2}$, $C_{E3}$...... $C_{Eq}$ de la population de q particules à examiner avec les coefficients de projection $C_{R1}$, $C_{R2}$, $C_{R3}$, ...., $C_{Rp}$ de la population de p particules de référence.

Cette comparaison s'effectue par la comparaison des moments statistiques d'ordre croissants de la population de q particules à examiner avec les moments statistiques d'ordre croissant de la population de p particules de référence. De façon plus générale, cette comparaison est effectuée au moyen des méthodes connues pour comparer des distributions statistiques comme le test Khi2 ou Kolmogorov Smimov.

On en déduit alors l'état statistique précis des différences morphologiques de la population de p particules par rapport à la population q de référence. Lorsque ces particules sont des matériaux divisés de ballast, on peut alors quantifier l'état d'usure de ce ballast et déclencher ou programmer une action de maintenance adaptée.

Le procédé de l'invention s'applique également à tout autre type de particules de préférence des particules centimétriques.

**Revendications**

1. Procédé de mesure granulométrique automatisée de particules, **caractérisé en ce qu'**il comprend au moins les étapes suivantes :

   - acquisition d'un nuage de points à trois dimensions de la surface de la particule à examiner par passage de la dite particule devant un dispositif optique (2,2a),
   - exploitation du nuage de points pour caractériser la forme globale de la particule (4,6) par le jeu de coefficients de projection $C_E$ sur une base de projection [F], laquelle base de projection [F] est déterminée par les étapes de :

     o acquisition d'un nuage de points à trois dimensions de la surface d'au moins une particule de référence par passage de cette particule (4,6) devant un dispositif optique (2,2a),
     o réduction de la caractérisation de la surface de la particule de référence (4,6) à un vecteur R à N dimensions à partir du nuage de points obtenus à l'étape précédente, et
     o détermination de la base de projection [F] permettant de caractériser la forme globale de la particule de référence par le jeu des coefficients de projection $C_R$ sur la dite base [F].

2. Procédé selon la revendication 1, **caractérisé en ce que** la vitesse de passage de la particule à examiner et de la particule de référence devant le dispositif optique (2,2a) lors des étapes d'acquisition est contrôlée pour obtenir la précision souhaitée de l'acquisition du nuage de points.

3. Procédé selon l'une quelconque des revendications 1 et 2, **caractérisé en ce que** l'acquisition du nuage de points à trois dimensions de la surface de la particule de référence et de la particule à examiner est réalisée à partir d'une collection d'images numériques de la particule prises sous plusieurs angles par un dispositif de prise d'image (2)

4. Procédé selon la revendication 3, **caractérisé en ce**

**que** la particule est placée sur un support mobile en translation (3) qui assure par son défilement selon une première direction (D1) un premier passage de la particule (4) devant le dispositif de prise d'image (2) au cours duquel une première face (4a) de la particule (4) fait face au dit dispositif de prise d'image (2) en permettant la collecte d'un premier nuage de points, **en ce qu'**une fois que la particule (4) est passée devant le dispositif de prise d'image (2), la dite particule (4) est retournée sur le support mobile (3), lequel assure alors par son défilement dans la direction opposée (D2) un second passage de la particule (4) devant le dispositif de prise d'image (2) au cours duquel une autre face (4b) de la dite particule (4) passe devant le dit dispositif de prise d'image (2) en permettant la collecte d'un second nuage de points, et **en ce qu'**une fusion des premier et second nuages de points est réalisée pour obtenir le nuage de points à trois dimensions.

5. Procédé selon l'une quelconque des revendications 1 et 2, **caractérisé en ce que** l'acquisition du nuage de points à trois dimensions de la particule à examiner et de la particule de référence est réalisée par une mesure optique directe de la position de points situés à la surface de la particule considérée.

6. Procédé selon la revendication 5, **caractérisé en ce que** la particule (6) est placée sur une surface vitrée (3a1) de part et d'autre de laquelle se trouve le dispositif optique (2a) qui réalise l'acquisition directe du nuage de points à trois dimensions.

7. Procédé selon l'une quelconque des revendications précédentes, **caractérisé en ce que** la réduction de la caractérisation de la surface de la particule de référence est réalisée par les étapes suivantes :

   - obtention d'un nuage de $N_p$ points, chacun de ces points étant décrit par un triplet de valeurs $(x_i, y_i, z_i)$ en coordonnées cartésiennes,
   - transformation du champ de points en coordonnées sphériques $(r_i(\theta, \phi))$ dans un repère centré sur le centre d'inertie du grain,
   - interpolation sur un maillage à pas angulaires fixes comportant Nr sommets,
   - rotation du nuage de points ainsi interpolés pour exprimer le dit nuage de points interpolés dans le repère des directions propres du tenseur d'inertie, et
   - interpolation sur une sphère dont les points sont uniformément répartis pour réduire la caractérisation de la surface de la particule à un vecteur R représentant le rayon du grain à N dimensions.

8. Procédé selon l'une quelconque des revendications précédentes, **caractérisé en ce que** la détermination de la base de projection [F] est réalisée à partir du vecteur R à N dimensions défini à l'étape de réduction de la caractérisation de la surface de la particule de référence et par la définition de M fonctions $F_1, ..., F_M$ avec M inférieur à N, telles que

$$R \cong [F]\, C$$

où $[F] = [F_1, ..., F_M]$
et où C est un vecteur de dimension M formant des coefficients de projection sur [F] qui caractérisent la forme globale de la particule (4,6).

9. Procédé selon l'une quelconque des revendications précédentes, **caractérisé en ce que** la base de projection [F] est déterminée par les étapes de :

   o acquisition de nuages de points à trois dimensions correspondant aux surfaces d'une population p de particules de référence par passage de chacune de ces particules (4,6) devant un dispositif optique (2,2a),
   o réduction de la caractérisation de la surface de chaque particule de référence (4,6) à un vecteur R à N dimensions à partir du nuage de points obtenus à l'étape précédente, et
   o détermination de la base de projection [F] permettant de caractériser la forme globale des particules par le jeu des coefficients de projection $C_{R1}$, $C_{R2}$, $C_{R3}$, ...., $C_{Rp}$ de chaque particule de référence sur la dite base [F].

10. Procédé d'évaluation de la déformation morphologique d'une population de q particules à examiner par rapport à une population de p particules de référence, **caractérisé en ce qu'**il comporte les étapes suivantes :

   - évaluation des coefficients de projection $C_{E1}$, $C_{E2}$, $C_{E3}$, ...., $C_{Eq}$ sur une base de projection [F] d'une population de q particules à examiner par la mesure granulométrique automatisée de chaque particule E1, E2, E3, ... Eq de la dite population de q particules selon l'une quelconque des revendications 1 à 9,
   - évaluation des coefficients de projection $C_{R1}$, $C_{R2}$, $C_{R3}$, ...., $C_{Rq}$ sur la base de projection [F] d'une population de q particules à examiner par la mesure granulométrique automatisée de chaque particule R1, R2, R3, ... Rp de la dite population de p particules de référence selon l'une quelconque des revendications 1 à 9, et
   - comparaison des valeurs des coefficients de projection $C_{E1}$, $C_{E2}$, $C_{E3}$, ...., $C_{Eq}$ de la population de q particules à examiner avec les coefficients de projection $C_{R1}$, $C_{R2}$, $C_{R3}$, ..., $C_{Rp}$ de la population de q particules de référence.

**11.** Procédé selon la revendication 10, **caractérisé en ce que** la comparaison des valeurs des coefficients de projection $C_{E1}$, $C_{E2}$, $C_{E3}$, ...., $C_{Eq}$ de la population de q particules à examiner avec les coefficients de projection $C_{R1}$, $C_{R2}$, $C_{R3}$, ...., $C_{Rp}$ de la population de q particules de référence est réalisée par la comparaison des moments statistiques d'ordre croissants de la population de q particules à examiner avec les moments statistiques d'ordre croissants de la population de p particules de référence.

**12.** Dispositif pour réaliser l'étape d'acquisition d'un nuage de points à trois dimensions de la surface d'une particule à examiner ou de référence du procédé de mesure granulométrique automatisée de particules selon l'une quelconque des revendications 1 à 8, **caractérisé en ce que** le dispositif comporte soit un dispositif optique de prise d'image numérique (2) couplé à un système de traitement d'image, et des moyens pour amener successivement au moins deux faces de la particule (4,6) en regard du dit dispositif de prise d'image numérique (2), soit un dispositif de mesure optique en trois dimensions (2a) disposé de part et d'autre d'une surface vitrée (3a1) et des moyens pour amener la particule (4,6) sur la surface vitrée (3a1) en regard du dit dispositif de mesure optique en trois dimensions (2a).

**13.** Dispositif selon la revendication 12 , **caractérisé en ce que** les moyens pour amener successivement au moins deux faces (4a,4b) de la particule (4) en regard du dispositif de prise d'image numérique (2) comportent un support mobile en translation (3) dans deux directions opposées (D1,D2) assurant par son défilement selon une première direction (D1) un premier passage de la particule (4) devant le dispositif de prise d'image numérique (2) au cours duquel une première face (4a) de la particule (4) fait face au dit dispositif de prise d'image numérique (2) en permettant la collecte d'un premier nuage de points, et assurant par son défilement dans la direction opposée (D2) un second passage de la particule (4) devant le dispositif de prise d'image numérique (2) au cours duquel la face opposée (4b) de la particule (4) fait face au dit dispositif de prise d'image numérique (2) en permettant la collecte d'un second nuage de points, et des moyens de retournement de la particule (5) après le premier passage de la particule (4) devant le dispositif de prise d'image numérique (2) et avant le second passage de la dite particule (4) devant le dispositif de prise d'image numérique (2).

**Patentansprüche**

**1.** Verfahren zur automatisierten granulometrischen Messung von Partikeln, **dadurch gekennzeichnet, dass** es wenigstens die folgenden Schritte umfasst:

- Erfassen einer dreidimensionalen Punktwolke der Oberfläche des zu untersuchenden Partikels durch Vorbeiführen des Partikels vor einer optischen Vorrichtung (2, 2a),
- Verwerten der Punktwolke zur Charakterisierung der Gesamtform des Partikels (4, 6) durch den Satz Projektionskoeffizienten $C_E$ auf einer Projektionsbasis [F], wobei die Projektionsbasis [F] durch die folgenden Schritte bestimmt wird:

    o Erfassen einer dreidimensionalen Punktwolke der Oberfläche wenigstens eines Referenzpartikels durch Vorbeiführen dieses Partikels (4, 6) vor einer optischen Vorrichtung (2, 2a),
    o Reduzieren der Charakterisierung der Oberfläche des Referenzpartikels (4, 6) auf einen Vektor R mit N Dimensionen anhand der Punktwolke, die beim vorhergehenden Schritt erhalten wurde, und
    o Bestimmen der Projektionsbasis [F], die es ermöglicht, die Gesamtform des Referenzpartikels durch den Satz der Projektionskoeffizienten $C_R$ auf der Basis [F] zu charakterisieren,

**2.** Verfahren nach Anspruch 1, **dadurch gekennzeichnet, dass** die Geschwindigkeit des Vorbeiführens des zu untersuchenden Partikels und des Referenzpartikels vor der optischen Vorrichtung (2, 2a) bei den Schritten des Erfassens gesteuert wird, um die gewünschte Genauigkeit der Erfassung der Punktwolke zu erzielen.

**3.** Verfahren nach einem der Ansprüche 1 und 2, **dadurch gekennzeichnet, dass** die Erfassung der dreidimensionalen Punktwolke der Oberfläche des Referenzpartikels und des zu untersuchenden Partikels anhand einer Sammlung von Digitalbildern des Partikels vorgenommen wird, die aus mehreren Winkeln von einer Bildaufnahmevorrichtung (2) aufgenommen werden.

**4.** Verfahren nach Anspruch 3, **dadurch gekennzeichnet, dass** das Partikel auf einem verschiebbaren Träger (3) platziert ist, der durch seine Fortbewegung in einer ersten Richtung (D1) eine erste Vorbeiführung des Partikels (4) vor der Bildaufnahmevorrichtung (2) sicherstellt, bei der eine erste Seite (4a) des Partikels (4) der Bildaufnahmevorrichtung (2) zugewandt ist, wobei die Erfassung einer ersten Punktwolke ermöglicht wird, dadurch, dass, sobald das Partikel (4) vor der Bildaufnahmevorrichtung (2) vorbeigeführt ist, das Partikel (4) auf dem verschiebbaren Träger (3) zurückgeführt wird, der sodann durch seine Fortbewegung in der entgegengesetzten Richtung (D2) eine zweite Vorbeiführung des Partikels (4) vor der Bildaufnahmevorrichtung (2) sicherstellt, bei der eine andere Seite (4b) des Partikels (4) vor der Bildaufnahmevorrichtung (2) vorbeigeführt wird, wobei die Erfassung einer zweiten Punktwolke ermöglicht wird, und dadurch, dass eine Zusammenführung der ersten und zweiten Punktwolke vorgenommen wird, um die dreidimensionale Punktwolke zu erhalten.

5. Verfahren nach einem der Ansprüche 1 und 2, **dadurch gekennzeichnet, dass** die Erfassung der dreidimensionalen Punktwolke des zu untersuchenden Partikels und des Referenzpartikels durch eine direkte optische Messung der Position von Punkten vorgenommen wird, die sich auf der Oberfläche des betreffenden Partikels befinden.

6. Verfahren nach Anspruch 5, **dadurch gekennzeichnet, dass** das Partikel (6) auf einer Glasoberfläche (3a1) platziert ist, auf deren beiden Seiten sich die optische Vorrichtung (2a) befindet, die die direkte Erfassung der dreidimensionalen Punktwolke vornimmt.

7. Verfahren nach einem der vorhergehenden Ansprüche, **dadurch gekennzeichnet, dass** die Reduzierung der Charakterisierung der Oberfläche des Referenzpartikels durch die folgenden Schritte vorgenommen wird:

   - Erstellen einer Wolke aus $N_p$ Punkten, wobei jeder dieser Punkte von einem Tripel aus Werten $(x_i, y_i, z_i)$ in kartesischen Koordinaten beschrieben wird,
   - Umwandeln des Punktefelds in Kugelkoordinaten $(r_i(\theta,\phi))$ in einem Koordinatensystem das auf den Massenmittelpunkt des Korns zentriert ist,
   - Interpolieren auf ein Netz mit festen Winkelabständen, das Nr Scheitelpunkte aufweist,
   - Drehen der Wolke aus so interpolierten Punkten, um die Wolke aus interpolierten Punkten im Koordinatensystem der eigenen Richtungen des Trägheitstensors auszudrücken, und
   - Interpolation auf eine Kugel, deren Punkte gleichmäßig verteilt sind, um die Charakterisierung der Oberfläche des Partikels auf einen Vektor R zu reduzieren, der den Radius des Korns mit N Dimensionen darstellt.

8. Verfahren nach einem der vorhergehenden Ansprüche, **dadurch gekennzeichnet, dass** die Bestimmung der Projektionsbasis [F] anhand des Vektors R mit N Dimensionen, der im Schritt des Reduzierens der Charakterisierung der Oberfläche des Referenzpartikels festgelegt wird, und durch die Festlegung von M Funktionen $F_1,...,F_M$ vorgenommen wird, wobei M kleiner als N, so dass

$$R \cong [F]\ C$$

wobei $[F] \approx [F_1...F_M]$
und wobei C ein Vektor der Dimension M ist, der Projektionskoeffizienten auf [F] bildet, die die Gesamtform des Partikels (4, 6) charakterisieren.

9. Verfahren nach einem der vorhergehenden Ansprüche, **dadurch gekennzeichnet, dass** die Projektionsbasis [F] durch die folgenden Schritte bestimmt wird:

   o Erfassen von dreidimensionalen Punktwolken, die den Oberflächen einer Population p von Referenzpartikeln entsprechen, durch Vorbeiführen jedes dieser Partikel (4, 6) vor einer optischen Vorrichtung (2, 2a),
   o Reduzieren der Charakterisierung der Oberfläche jedes Referenzpartikels (4, 6) auf einen Vektor R mit N Dimensionen anhand der Punktwolke, die beim vorhergehenden Schritt erhalten wurde, und
   o Bestimmen der Projektionsbasis [F], die es ermöglicht, die Gesamtform der Partikel durch den Satz der Projektionskoeffizienten $C_{R1}$, $C_{R2}$, $C_{R3}$, ..., $C_{Rp}$ jedes Referenzpartikels auf der Basis [F] zu charakterisieren.

10. Verfahren zur Bewertung der morphologischen Verformung einer zu untersuchenden Population aus q Partikeln im Vergleich zu einer Population aus p Referenzpartikeln, **dadurch gekennzeichnet, dass** es die folgenden Schritte umfasst:

   - Bewerten der Projektionskoeffizienten $C_{E1}$, $C_{E2}$, $C_{E3}$,...$C_{Eq}$ auf einer Projektionsbasis [F] einer Population aus q Partikeln, die durch die automatisierte granulometrische Messung jedes Partikels E1, E2, E3, ... Eq der Population aus q Partikeln nach einem der Ansprüche 1 bis 9 zu untersuchen ist,
   - Bewerten der Projektionskoeffizienten $C_{R1}$, $C_{R2}$, $C_{R3}$, ...$C_{Rq}$ auf der Projektionsbasis [F] einer Population aus q Partikeln, die durch die automatisierte granulometrische Messung jedes Partikels R1, R2, R3, ... Rp der Population aus p Referenzpartikeln nach einem der Ansprüche 1 bis 9 zu untersuchen ist, und
   - Vergleichen der Werte der Projektionskoeffizienten $C_{E1}$, $C_{E2}$, $C_{E3}$,...$C_{Eq}$ der Population aus q zu untersuchenden Partikeln mit den Projektionskoeffizienten $C_{R1}$, $C_{R2}$, $C_{R3}$, ..., $C_{Rp}$ der Population aus q Referenzpartikeln.

11. Verfahren nach Anspruch 10, **dadurch gekennzeichnet, dass** der Vergleich der Werte der Projektionskoeffizienten $C_{E1}$, $C_{E2}$, $C_{E3}$, ... $C_{Eq}$ der Population aus q zu untersuchenden Partikeln mit den Projektionskoeffizienten $C_{R1}$, $C_{R2}$, $C_{R3}$,...$C_{Rp}$ der Population aus q Referenzpartikeln durch den Vergleich der statistischen Momente steigender Ordnung der Population aus q zu untersuchender Partikel mit den statistischen Momenten steigender Ordnung der Population aus p Referenzpartikeln vorgenommen wird.

12. Vorrichtung zur Durchführung des Schritts des Erfassens einer dreidimensionalen Punktwolke der Oberfläche eines zu untersuchenden Partikels oder Referenzpartikels des Verfahrens zur automatisierten granulometrischen Messung nach einem der Ansprüche 1 bis 8, **dadurch gekennzeichnet, dass** die Vorrichtung entweder eine optische Vorrichtung zur Digitalbildaufnahme (2), die an ein Bildverarbeitungssystem gekoppelt ist, und Mittel, um nacheinander wenigstens zwei Seiten des Partikels (4, 6) vor die Digitalbildaufnahmevorrichtung (2) zu bringen, oder eine Vorrichtung zur dreidimensionalen optischen Messung (2a), die beiderseits einer Glasoberfläche (3a1) angeordnet ist, und Mittel, um das Partikel (4, 6) auf der Glasoberfläche (3a1) vor die Vorrichtung zur dreidimensionalen optischen Messung (2a) zu bringen, aufweist.

13. Vorrichtung nach Anspruch 12, **dadurch gekennzeichnet, dass** die Mittel, um nacheinander wenigstens zwei Seiten (4a, 4b) des Partikels (4) vor die Digitalbildaufnahmevorrichtung (2) zu bringen, einen Träger (3), der in zwei entgegengesetzte Richtungen (D1, D2) verschiebbar ist, der durch seine Fortbewegung in einer ersten Richtung (D1) eine erste Vorbeiführung des Partikels (4) vor der Digitalbildaufnahmevorrichtung (2) sicherstellt, in deren Verlauf eine erste Seite (4a) des Partikels (4) der Digitalbildaufnahmevorrichtung (2) zugewandt ist, wobei die Erfassung einer ersten Punktwolke ermöglicht wird, und durch seine Fortbewegung in der entgegengesetzten Richtung (D2) eine zweite Vorbeiführung des Partikels (4) vor der Digitalbildaufnahmevorrichtung (2) sicherstellt, in deren Verlauf die gegenüberliegende Seite (4b) des Partikels (4) der Digitalbildaufnahmevorrichtung (2) zugewandt ist, wobei die Erfassung einer zweiten Punktwolke ermöglicht wird, und Mittel zur Rückführung des Partikels (5) nach der ersten Vorbeiführung des Partikels (4) vor der Digitalbildaufnahmevorrichtung (2) und vor der zweiten Vorbeiführung des Partikels (4) vor der Digitalbildaufnahmevorrichtung (2) aufweisen.

## Claims

1. Method for automated particle-size measurement of particles, **characterized in that** it comprises at least the following steps:

- acquiring a three-dimensional cloud of points of the surface of the particle to be examined by passing said particle in front of an optical device (2, 2a),
- utilizing the cloud of points in order to characterize the overall shape of the particle (4, 6) by the set of projection coefficients $C_E$ on a projection base [F], which projection base [F] is determined by the steps of:

  o acquiring a three-dimensional cloud of points of the surface of at least one reference particle by passing this particle (4, 6) in front of an optical device (2, 2a),
  o reducing the characterization of the surface of the reference particle (4, 6) to an N-dimensional vector R on the basis of the cloud of points which were obtained in the preceding step, and
  o determining the projection base [F] which makes it possible to characterize the overall shape of the reference particle by the set of projection coefficients $C_R$ on said base [F].

2. Method according to Claim 1, **characterized in that** the speed at which the particle to be examined and the reference particle pass in front of the optical device (2, 2a) during the acquisition steps is controlled in order to obtain the desired precision in the acquisition of the cloud of points.

3. Method according to either one of Claims 1 and 2, **characterized in that** the three-dimensional cloud of points of the surface of the reference particle and of the particle to be examined is acquired on the basis of collecting digital images of the particle taken from a plurality of angles by an imaging device (2).

4. Method according to Claim 3, **characterized in that** the particle is placed on a carrier (3) which can move translationally and, by shifting in a first direction (D1), passes the particle (4) in front of the imaging device (2) a first time, during which a first face (4a) of the particle (4) faces said imaging device (2), making it possible to collect a first cloud of points, **in that**, once the particle (4) has passed in front of the imaging device (2), said particle (4) is turned over on the movable carrier (3), which then, by shifting in the opposite direction (D2), passes the particle (4) in front of the imaging device (2) a second time, during which another face (4b) of said particle (4) passes in front of said imaging device (2), making it possible to collect a second cloud of points, and **in that** the first and second clouds of points are merged in order to obtain the three-dimensional cloud of points.

**5.** Method according to either one of Claims 1 and 2, **characterized in that** the three-dimensional cloud of points of the particle to be examined and of the reference particle is acquired by direct optical measurement of the position of points which are situated on the surface of the particle under consideration.

**6.** Method according to Claim 5, **characterized in that** the particle (6) is placed on a glazed surface (3a1) on either side of which the optical device (2a) which directly acquires the three-dimensional cloud of points is located.

**7.** Method according to any one of the preceding claims, **characterized in that** the characterization of the surface of the reference particle is reduced by the following steps:

- obtaining a cloud of $N_p$ points, each of these points being described by a triplet of values $(x_i, y_i, z_i)$ in Cartesian coordinates,
- transforming the field of points in spherical coordinates $(r_i(\theta, \varphi))$ into a reference frame centred on the centre of inertia of the grain,
- interpolating on a mesh with fixed angular pitches comprising Nr vertices,
- rotating the cloud of points thus interpolated in order to express said cloud of interpolated points in the reference frame of the specific directions of the inertia tensor, and
- interpolating on a sphere the points of which are uniformly distributed in order to reduce the characterization of the surface of the particle to an N-dimensional vector R representing the radius of the grain.

**8.** Method according to any one of the preceding claims, **characterized in that** the projection base [F] is determined on the basis of the N-dimensional vector R defined in the step of reducing the characterization of the surface of the reference particle and by defining M functions $F_1, ..., F_M$ with M less than N, such that

$$R \cong [F] C$$

where $[F] = [F_1, ..., F_M]$
and where C is an M-dimensional vector forming projection coefficients on [F] which characterize the overall shape of the particle (4, 6).

**9.** Method according to any one of the preceding claims, **characterized in that** the projection base [F] is determined by the steps of:

o acquiring three-dimensional clouds of points corresponding to the surfaces of a population p of reference particles by passing each of these particles (4, 6) in front of an optical device (2, 2a),
o reducing the characterization of the surface of each reference particle (4, 6) to an N-dimensional vector R on the basis of the cloud of points which were obtained in the preceding step, and
o determining the projection base [F] which makes it possible to characterize the overall shape of the particles by the set of projection coefficients $C_{R1}, C_{R2}, C_{R3}, ..., C_{Rp}$ of each reference particle on said base [F].

**10.** Method for evaluating the morphological deformation of a population of q particles to be examined with respect to a population of p reference particles, **characterized in that** it comprises the following steps:

- evaluating the projection coefficients $C_{E1}, C_{E2}, C_{E3}, ..., C_{Eq}$ on a projection base [F] of a population of q particles to be examined by automated particle-size measurement of each particle E1, E2, E3, ... Eq of said population of q particles according to any one of Claims 1 to 9,
- evaluating the projection coefficients $C_{R1}, C_{R2}, C_{R3}, ..., C_{Rq}$ on the projection base [F] of a population of q particles to be examined by automated particle-size measurement of each particle R1, R2, R3, ... Rp of said population of p reference particles according to any one of Claims 1 to 9, and
- comparing the values of the projection coefficients $C_{E1}, C_{E2}, C_{E3}, ..., C_{Eq}$ of the population of q particles to be examined with the projection coefficients $C_{R1}, C_{R2}, C_{R3}, ..., C_{Rp}$ of the population of q reference particles.

**11.** Method according to Claim 10, **characterized in that** the values of the projection coefficients $C_{E1}, C_{E2}, C_{E3}, ..., C_{Eq}$ of the population of q particles to be examined are compared with the projection coefficients $C_{R1}, C_{R2}, C_{R3}, ..., C_{Rp}$ of the population of q reference particles by comparing the statistical moments of increasing order of the population of q particles to be examined with the statistical moments of increasing order of the population of p reference particles.

**12.** Device for performing the step of acquiring a three-dimensional cloud of points of the surface of a particle to be examined or reference particle of the method for automated particle-size measurement of particles according to any one of Claims 1 to 8, **characterized in that** the device comprises either an digital imaging optical device (2) coupled to an image-processing system, and means for successively bringing at least two faces of the particle (4, 6) to face said digital imaging device (2) or a three-dimensional optical measuring device (2a) arranged on either side of a glazed surface (3a1) and means for bringing the particle (4, 6) on the glazed surface (3a1) to face said three-dimensional optical measuring device (2a).

13. Device according to Claim 12, **characterized in that** the means for successively bringing at least two faces (4a, 4b) of the particle (4) to face the digital imaging device (2) comprise a carrier (3) which can move translationally in two opposite directions (D1, D2) and, by shifting in a first direction (D1), passes the particle (4) in front of the digital imaging device (2) a first time, during which a first face (4a) of the particle (4) faces said digital imaging device (2), making it possible to collect a first cloud of points, and, by shifting in the opposite direction (D2), passes the particle (4) in front of the digital imaging device (2) a second time, during which the opposite face (4b) of the particle (4) faces said digital imaging device (2), making it possible to collect a second cloud of points, and means (5) for turning the particle over after the particle (4) has passed in front of the digital imaging device (2) the first time and before said particle (4) passes in front of the digital imaging device (2) the second time.

FIG. 1

FIG. 2

FIG. 3

FIG. 4

FIG. 5

FIG. 6

**EP 3 146 309 B1**

## RÉFÉRENCES CITÉES DANS LA DESCRIPTION

**Documents brevets cités dans la description**

- WO 03005000 A
- WO 2004102164 A
- FR 1588650